# EUROPÄISCHE PATENTANMELDUNG

(11) **EP 4 421 473 A1**
(43) Veröffentlichungstag der Anmeldung: **28.08.2024**
(21) Anmeldenummer: 24158683.3
(22) Anmeldetag: 20.02.2024
(51) Int. Cl.: G01N 3/04, G01N 3/08

(54) **PRÜFVORRICHTUNG ZUR AUTOMATISIERBAREN ERZEUGUNG EINES MIXED-MODE-BELASTUNGSZUSTANDES**

(30) Priorität: 24.02.2023 DE 102023104596
(71) Anmelder: Deutsches Zentrum für Luft- und Raumfahrt e.V., 53227 Bonn (DE)
(72) Erfinder: BREITBARTH, Eric, 51147 Köln (DE); STROHMANN, Tobias, 51147 Köln (DE); PAYSAN, Florian, 51147 Köln (DE); DIETRICH, Eric, 51147 Köln (DE); FISCHER, Alexa, 51147 Köln (DE)
(74) Vertreter: dompatent von Kreisler Selting Werner - Partnerschaft von Patent- und Rechtsanwälten mbB

(57) **Zusammenfassung**

Prüfvorrichtung zur automatisierbaren Erzeugung eines Mixed-Mode-Belastungszustands an einer einaxialen Prüfmaschine, die Prüfvorrichtung umfassend eine erste und eine zweite Spanneinrichtung zur Einspannung eines Prüfkörpers in einer Prüfebene sowie eine Stelleinrichtung, wobei die erste und zweite Spanneinrichtung jeweils einen Probenhalter zur Einspannung von zwei einander gegenüberliegender Enden des Prüfkörpers und jeweils eine Lastübertragungseinrichtung zur lasttragenden Verbindung der Probenhalter entlang einer Prüfrichtung mit der Prüfmaschine umfasst, wobei der jeweilige Probenhalter gegenüber der jeweiligen Lastübertragungseinrichtung in der Prüfebene verschiebbar ausgestaltet ist zur Veränderung einer Winkellage der Probenhalter relativ zu den Lastübertragungseinrichtungen, und wobei die Stelleinrichtung dazu ausgebildet ist, die Winkellage der Probenhalter gegenüber der jeweiligen Lastübertragungseinrichtung in der Prüfebene einzustellen.

## Beschreibung

Die vorliegende Erfindung betrifft eine Prüfvorrichtung zur automatisierbaren Erzeugung eines Mixed-Mode-Belastungszustandes an einer einaxialen Prüfmaschine sowie ein Prüfsystem umfassend eine einaxiale Prüfmaschine sowie eine erfindungsgemäße Prüfvorrichtung und die Verwendung einer Prüfvorrichtung zur Erzeugung eines veränderbaren Mixed-Mode-Belastungszustandes in einem Prüfkörper an einer einaxialen Prüfmaschine.

In der Bruchmechanik werden drei grundlegende Beanspruchungsarten bzw. Modi einer der mechanischen Beanspruchung eines vorliegenden Risses in einem Körper oder Bauteil unterschieden. Der Modus I beschreibt die Beanspruchung eines Risses, welche ein Öffnen der sogenannten Rissflanken des Risses bewirkt. In der Regel sind dies alle Belastungen, welche normal zur Rissfront in dem rissbehafteten Körper wirken. Als Beispiel für eine derartige Mode-I-Belastung kann ein unter Zug- oder Biegebelastung stehender Körper angegeben werden, bei welchem der Riss senkrecht zur Normalspannung verläuft. Unter dem Modus II werden Beanspruchungen kategorisiert, die eine entgegengesetzte Verschiebung der Rissflanken in Rissausbreitungsrichtung bzw. Verlaufsrichtung des Risses hervorrufen. Derartige Modus-II-Beanspruchungen werden häufig durch Schubbelastungen hervorgerufen.

Unter dem Modus III werden Beanspruchungen eines rissbehafteten Körpers gezählt, welche eine Verschiebung der Rissflanken des Risses quer zu dessen Rissausbreitungsrichtung bewirken. Die Modus-III-Beanspruchen treten häufig beispielsweise in Wellen auf, welche unter Torsionsbelastung stehen und bei welchen ein Riss senkrecht zur Wellenlängsachse verläuft. Bei dem gleichzeitigen Auftreten mehrere der drei vorbezeichneten Modi an einer Rissfront spricht man von einer sogenannten Mixed-Mode-Beanspruchung. Derartige Mixed-Mode-Beanspruchungen können durch eine mehrachsige äußere Belastung eines Bauteils hervorgerufen werden. Allerdings können auch bei einer einachsigen Belastung eines rissbehafteten Körpers sich im Bereich der Rissfront eine Mixed-Mode-Belastung ergeben, dies beispielsweise, wenn der Riss nicht orthogonal zu einer Achse der wirkenden Hauptnormalspannung innerhalb des Körpers vorliegt.

In der Realität treten somit häufig Mixed-Mode-Belastungen bei Rissen auf, welche zu einem Risswachstum und schließlich Versagen eines Gesamtbauteils führen können.

Im Rahmen der werkstoffmechanischen Untersuchung ist es für die Untersuchung und Vorhersage der Lebensdauer eines rissbehafteten Bauteils entsprechend relevant, Versuche an rissbehafteten Prüfkörpern durchzuführen, in welchen eine Mixed-Mode-Belastung im in den Prüfkörper eingebrachten Riss erzeugt werden kann. Aus dem Stand der Technik sind zur Erzeugung derartiger Mixed-Mode-Belastungen in rissbehafteten Prüfkörpern unterschiedliche Verfahren bekannt geworden, welche nachfolgend ausgeführt werden sollen.

Eine Möglichkeit für eine Mixed-Mode-Prüfung eines rissbehafteten Prüfkörpers ist ein asymmetrischer Biegeversuch. Bei dem sogenannten Vier-Punkt-Biegeversuch wird eine Probe auf zwei parallelen Auflagern von zwei Biegefinnen belastet und dadurch gebogen. Der Vorteil des Vier-Punkt-Biegeversuches zu einem Drei-Punkt-Biegeversuch mit nur einer Biegefinne ist, dass beim Vier-Punkt-Biegeversuch zwischen den Biegefinnen das Biegemoment konstant ist, wodurch auch reine Mode II-Prüfungen möglich sind [1]. Marques et al. [2] verwendeten eine Single Edge Notch Bend (SENB) Probe im Vier-Punkt-Biegeversuch, um die Rissausbreitung der Aluminiumlegierung AA6082-T6 unter zyklischen reinen Mode II und Mixed-Mode I/II-Belastungen zu testen und die Stressintensitätsfaktoren Ki/KII zu bestimmen.

Dadurch, dass im oberen Teil der Probe Druck- und im unteren Teil der Probe Zugspannungen herrschen [3], lassen sich Zug- und Druckbelastungen an nur einer Probe prüfen. Eine Limitierung des Versuchs ist, dass keine dünnen Proben mit wenigen Millimetern Dicke geprüft werden können. Dies ist jedoch insbesondere für die Prüfung von Luftfahrzeugwerkstoffen relevant. Eine weitere Limitation ist, dass das Ändern der Belastungsrichtung nach bereits erfolgter Belastung schwer möglich ist, da die Probe bereits plastisch verformt wurde. Außerdem wird insbesondere oberflächennahes Werkstoffverhalten abgebildet [4], denn nahe der Oberfläche erfährt der Prüfkörper beim Biegen die größte Verformung [5].

Eine weitere Methode zum Prüfen von Mixed-Mode-Belastungen ist die Aufbringung einer einaxialen Last in eine Probe mit schräg eingebrachtem Riss (engl. *Inclined cracked tension specimen*) [1]. Eine Verwendung dieser Methode zur Untersuchung veränderlicher Versuchsbedingungen und veränderter Mixed-Mode-Belastungen wird dadurch limitiert, dass Ermüdungsrisse die Tendenz haben, sich unter Rissfortschritt senkrecht zur Mode-I-Belastungsrichtung auszurichten. Außerdem werden für verschiedene Belastungsrichtungen verschiedene Probengeometrien benötigt.

Mit einer Arcan-Prüfung kann eine Probe aus vielen verschiedenen Winkeln geprüft werden. Dabei wird eine schmetterlingsförmige Probe mit Schrauben in einem runden, teilbaren Rahmen befestigt. Über die Löcher außen am Rahmen kann der Belastungswinkel eingestellt werden. Ursprünglich wurde diese Probengeometrie von Arcan et al. [6] entworfen, um gleichförmige Spannungszustände in adhäsiv gefertigten Verbundwerkstoffen zu erzeugen. Durch die Einkerbungen in der Probe sollte im Prüfbereich ein gleichförmiger Schubspannungszustand erzeugt werden [7]. Der Rahmen fand jedoch auch in bruchmechanischen Untersuchungen Verwendung: E. Miller [8] nutzte einen Arcan-Rahmen, um den Risspfad in 6,35 mm dicken Al-2024-T351-Proben unter zyklischen Mixed-Mode-Belastungen (Mode I/II) zu untersuchen. Seyedzavvar et al. [9] untersuchten mit einem modifizierten Arcan-Rahmen das Verhalten der Nickelbasis-Superlegierung F2063 unter Mixed-Mode-Bedingungen und verschiedenen Temperaturen. Die gleiche Probe kann nacheinander aus unterschiedlichen Winkeln belastet werden, ohne aus dem Rahmen entnommen zu werden. Der Rahmen muss hierfür jedoch immer aus der Prüfmaschine ausgebaut werden, was eine Automatisierung verhindert. Des Weiteren ist die Wahl des Winkels nur in einem Abstand von 15° möglich. Durch ein schiefes Einspannen der Probe kann es zu ungewollter Torsion der Probe kommen [1].

Ähnlich wie der Arcan-Rahmen funktioniert der Rahmen nach Richard und Benitz [10]. Hier wird eine CTS (compact tension shear)-Probe in einem verstellbaren Rahmen eingespannt. Der Rahmenwinkel kann - wie beim Arcan-Rahmen - über die Wahl der Bohrungen außen am Rahmen manuell eingestellt werden. Die Bohrungen befinden sich in einem Abstand von 15°. Borrego et al. [11] verwendeten den Rahmen, um das Rissschließen (engl. Crack closure) unter verschiedenen zyklischen Mixed-Mode-Belastungen einer 3 mm dicken CTS-Probe aus der Aluminiumlegierung AlMgSi1 T6 zu untersuchen. Shahani et al. [12] untersuchten das Risswachstumsverhalten der Aluminiumlegierung Al5083-H111 mit dem genannten Rahmen und einer 5 mm dicken CTS-Probe. Nejad und Liu [13] prüften perlitischen Stahl 900AA auf sein bruchmechanisches Verhalten mit der genannten Methode. Mit diesem Rahmen ist ein einfaches manuelles Drehen der Probe für verschiedene Versuche nacheinander möglich. Der Lasteinleitungswinkel ist wie beim Arcan-Rahmen durch den vorgegebenen Bohrungsabstand von 15° limitiert [1].

Für biaxiale Prüfungen gibt es kreuzförmige Proben, die sowohl in x- als auch in y-Richtung belastet werden können. Um diese auch unter Mixed-Mode-Belastungen prüfen zu können, kann ein schräger Riss anstatt eines geraden Risses eingebracht werden. Durch das Verändern des Risswinkels und der biaxialen Hauptspannungen können verschiedene Mixed-Mode I/II- Kombinationen geprüft werden [15]. Die biaxialen Proben ermöglichen eine Untersuchung der Risswachstumsrate unter dem Einfluss von T-Spannungen oder phasenversetzten Belastungen. T-Spannungen sind homogene Zug- oder Druckspannungen in Richtung der Rissebene, die durch den Riss nicht gestört werden [16]. Die T-Spannungen beeinflussen die plastische Zone an der Rissspitze und das Risswachstum [17]. Phasenversetzte Spannungen können für ein Aufspalten des Risses sorgen. Henkel et al. [17] untersuchten diese Einflüsse an einer kreuzförmigen Probe mit unter 45° geneigtem Riss aus der Aluminiumlegierung 6061 T651. Shlyannikov et al. [15] nutzten die biaxiale Kreuzprobe, um die Rissausbreitungsrate unter zyklischen Mixed-Mode Belastungen in hochfestem Stahl zu untersuchen. Die biaxiale Kreuzprobe bietet die Möglichkeit, zusätzliche Einflüsse auf die Rissausbreitungsrate zu untersuchen. Die Probengeometrie ist jedoch sehr aufwendig zu fertigen und für verschiedene Mixed-Mode-Untersuchungen werden verschiedene Proben mit unterschiedlichen Risswinkeln benötigt.
[1] Y. Wang, W. Wang, B. Zhang, and C.-Q. Li, "A review on mixed mode fracture of metals," Engineering Fracture Mechanics, vol. 235, 2020, doi: https://doi.org/10.1016/j.engfracmech.2020.107126.
[2] J. B. Marques, S. M. O. Tavares, and P. M. S. T. de Castro, "Analysis of mode II and mixed mode I-II in fracture and fatigue: A numerical and experimental study," Advanced Structured Materials, vol. 98, pp. 403-423, 2019, doi: 10.1007/978-3-030-02257-0_28.
[3] tec-science. "Biegeversuch." https://www.tec-science.com/de/werkstofftechnik/werkstoffpruefung/biegeversuch/ (accessed October 18, 2022).
[4] ZwickRoell. "Biegeversuch." https://www.zwickroell.com/de/branchen/werkstoffpruefungmaterialpruefung/biegeversuch/ (accessed October 21, 2022).
[5] A. H. Fritz, Fertigungstechnik. Springer Vieweg, 2018.
[6] M. Arcan, Z. Hashin, and A. Voloshin, "A Method to Produce Uniform Planestress States with Applications to Fiber-reinforced Materials," 1977.
[7] R. Ganesan, "Experimental characterization of interlaminar shear strength," in Composite Science and Engineering, 2008, ch. 5, pp. 117-137.
[8] E. Miller, "Experimental and Simulation Predicted Crack Paths For AL-2024-T351 Under Mixed-Mode I/II Fatigue Loading Using an Arcan Fixture," Doctoral dissertation, University of South Carolina - Columbia, South Carolina, Columbia 2013.
[9] M. Seyedzavvar, C. Boga, and N. Choupani, "Experimental investigation and numerical analysis: fracture mechanics and microstructural development in Ni55.8Ti superalloy under mixed-mode loading at diferent temperatures," Meccanica, vol. 57, no. 8, pp. 2067-2084, 2022, doi: 10.1007/s11012-022-01550-4.
[10] H. A. Richard and K. Benitz, "A laoding device for the cration of mixed mode in fracture mechanics," International Journal of Fracture, vol. 22, pp. 55-58, 1983, doi: https://doi.org/10.1007/BF00942726.
[11] L. P. Borrego, F. V. Antunes, J. M. Costa, and J. M. Ferreira, "Mixed-mode fatigue crack growth behaviour in aluminium alloy," International Journal of Fatigue, vol. 28, no. 5-6, pp. 618-626, 2006, doi: https://doi.org/10.1016/j.ijfatigue.2005.07.047.
[12] A. R. Shahani, I. Shakeri, and C. D. Rans, "Fatigue crack growth of Al 5083-H111 subjected to mixed-mode loading," Journal of the Brazilian Society of Mechanical Sciences and Engineering, vol. 42, no. 8, 2020, Art no. 442, doi: https://doi.org/10.1007/s40430-020- 02527-8.
[13] R. M. Nejad and Z. Liu, "Analysis of fatigue crack growth under mixed-mode loading conditions for a pearlitic Grade 900A steel used in railway applications," Engineering Fracture Mechanics, vol. 247, 2021, doi: https://doi.org/10.1016/j.engfracmech.2021.107672.
[14] S. M. J. Razavi, Berto, F., "A new fixture for fracture tests under mixed mode I/II/III loading," Fatigue & Fracture of Engineering Materials & Structures, vol. 42, no. 9, pp. 1874-1888, 2019, doi: 10.1111/ffe.13033.
[15] V. N. Shlyannikov, A. V. Tumanov, and A. P. Zakharov, "The mixed mode crack growth rate in cruciform specimens subject to biaxial loading," Theoretical and Applied Fracture Mechanics, vol. 73, pp. 68-81, 2014, doi: https://doi.org/10.1016/j.tafmec.2014.06.016.
[16] D. Radaj and M. Vormwald, Ermüdungsfestigkeit. Springer-Verlag Berlin Heidelberg, 2007.
[17] S. Henkel, E. Liebelt, H. Biermann, S. Ackermann, and L. Zybell, "Crack growth behavior of aluminum alloy 6061 T651 under uniaxial and biaxial planar testing condition," Frattura ed Integrita Strutturale, vol. 9, no. 34, pp. 466-475, 2015, doi: 10.3221/IGF-ESIS.34.52.

Nachteilig an den aus dem Stand der Technik bekannten Verfahren zur Erzeugung eines Mixed-Mode-Zustandes innerhalb eines Risses eines Prüfkörpers sind bei den biaxialen Prüfmaschinen die Komplexität der eigentlichen Prüfmaschine sowie der damit verbundene hohe Koordinationsaufwand für die Steuerung der biaxialen Prüfmaschine zur Generierung eines definierten Mixed-Mode-Belastungszustandes. Weiterhin ist es nicht möglich, einen Mixed-Mode-Zustand aufzuprägen, sobald der Riss sich parallel zu einer der beiden Achsen ausgerichtet hat.

Bei den Vorrichtungen zur Erzeugung eines Mixed-Mode-Belastungszustandes im Rahmen der Nutzung von einaxialen Prüfmaschinen ist zunächst nachteilig, dass die Verfahren lediglich eine manuelle und aufgrund von fest vorgegebenen Einstellwinkeln lediglich eine stufenweise manuell einstellbare Mixed-Mode-Belastung ermöglichen. Wobei bei den aus dem Stand der Technik bekannten Vorrichtungen weiterhin der Nachteil besteht, dass diese zur Veränderung des Mixed-Mode-Zustandes manuell durch Versetzung der in der Prüfvorrichtung vorhandenen Bolzen geometrisch verändert werden müssen, welches eine zuvor komplette Entlastung des Prüfkörpers voraussetzt und weiterhin einen manuellen Eingriff während der gesamten Prüfzeit erfordert. Bei einigen Verfahren wird sogar die Entfernung des Prüfköpers aus der Prüfmaschine erforderlich.

Ausgehend von den vorbezeichneten Nachteilen der Prüfvorrichtungen des Standes der Technik ist es die Aufgabe der vorliegenden Erfindung, eine Prüfvorrichtung zur Erzeugung eines Mixed-Mode-Belastungszustandes innerhalb eines Prüfkörpers unter Verwendung einer einaxialen Prüfmaschine bereitzustellen, bei welcher eine flexible Einstellung eines beliebig gewünschten Mixed-Mode-Belastungszustandes ermöglicht wird und wobei ein manueller Eingriff zur Veränderung des Mixed-Mode-Belastungszustandes gänzlich verhindert werden kann. Somit soll es möglich sein, anhand ein und derselben Probe verschiedene Mixed-Mode-Belastungszustände über die Versuchsdauer gezielt, automatisiert und stufenlos einzustellen.

Gemäß einem ersten Aspekt wird die Aufgabe gelöst durch eine Prüfvorrichtung zur Erzeugung eines Mixed-Mode-Belastungszustandes an einer einaxialen Prüfmaschine, wobei die Prüfvorrichtung eine erste und eine zweite Spanneinrichtung zum Einspannen eines Prüfkörpers in einer Prüfebene sowie eine Stelleinrichtung umfasst. Die erste und zweite Spanneinrichtung umfasst jeweils einen Probenhalter zur Einspannung von zwei einander gegenüberliegenden Enden des Prüfkörpers und jeweils eine Lastübertragungseinrichtung zur lasttragenden Verbindung der Probenhalter entlang einer Prüfrichtung mit der Prüfmaschine. Der jeweilige Probenhalter ist gegenüber der jeweiligen Lastübertragungseinrichtung in der Prüfebene verschiebbar ausgestaltet, zur Veränderung einer Winkellage der Probenhalter relativ zu den Lastübertragungseinrichtungen. Die Stelleinrichtung ist dabei dazu ausgebildet, die Winkellage der Probenhalter gegenüber der jeweiligen Lastübertragungseinrichtung in der Prüfebene stufenlos einzustellen.

Durch die erfindungsgemäße Prüfvorrichtung wird über die in die eigentliche Prüfvorrichtung integrierte Stelleinrichtung ermöglicht, die Winkellage der Probenhalter gegenüber der Lastübertragungseinrichtung in der Prüfebene beliebig und stufenlos zu verändern bzw. einzustellen. Bei einer derartigen Veränderung der Winkellage der Probenhalter wird selbstverständlich auch die zwischen den beiden gegenüberliegenden Probenhaltern eingespannte Werkstoffprobe enthaltend einen eingebrachten Riss in der Winkellage verändert, wobei durch die geänderte Winkellage eben auch der Mixed-Mode-Belastungszustand in dem Riss direkt über die Stelleinrichtung automatisiert verändert werden kann.

Erfindungsgemäß kann vorgesehen sein, dass die Probenhalter jeweils eine in der Prüfebene verlaufende bogenförmige Führungsschiene umfassen und wobei die Lastübertragungseinrichtung jeweils zumindest ein an die Führungsschiene angepasstes Führungselement umfassen zur Ausbildung mindestens zwei in der Prüfebene verschiebbarer und in der Prüfrichtung lastübertragender Lager.

Zwischen den Probenhaltern und den Lastübertragungseinrichtungen kann in der Prüfebene eine Mehrzahl von Gleit- oder Wälzlagerelementen angeordnet werden. Die Gleit- oder Wälzlagerelemente weisen den Vorteil auf, dass die Probenhalter relativ zu den Lastübertragungseinrichtungen unter geringem Kraftaufwand mittels der Stelleinrichtung in die gewünschte Winkellage überführt werden können, ohne dass dabei hohe Drehmomente für die Stelleinrichtung erforderlich wären. Die Führungsschiene kann in einer Ebene orthogonal zu der Prüfebene ein "T"-förmiges Querschnittsprofil umfassen.

Erfindungsgemäß kann es auch vorgesehen werden, dass die Führungsschiene in einer Ebene orthogonal zu der Prüfebene ein schwalbenschwanzförmiges Querschnittsprofil umfasst. Das schwalbenschwanzförmige Querschnittsprofil ist zur Lastübertragung zwischen den Probenhaltern und der Lastübertragungseinrichtung besonders geeignet, da auch über die Schrägen der Schwalbenschwanzführung entsprechende Lasten übertragen werden können.

Jede Lastübertragungseinrichtung kann zwei parallel zu der Prüfebene bogenförmig verlaufende, gegenüber der Prüfebene einander gegenüberliegende, Führungselemente umfassen. Dabei können die bogenförmigen Führungselemente an die Dimensionen und den Verlauf der Führungsschiene angepasst ausgebildet werden. Die Führungselemente können in die jeweiligen Führungselemente eingreifen zur Ausbildung eines verschieblichen Lagers zwischen dem jeweiligen Probenhalter und der jeweiligen Lastübertragungseinrichtung. Bei dem Lager kann es sich beispielsweise um ein verschiebliches Gleitlager handeln.

Die Stelleinrichtung kann zumindest einen ortsfest an der jeweiligen Lastübertragungseinrichtung angeordneten Stellmotor mit einer schraubenförmigen Schneckenwelle umfassen. Der jeweilige Probenhalter kann dabei ein an die Schneckenwelle angepasstes Zahnverlaufsprofil umfassen zur unmittelbaren Veränderung bzw. Einstellung der Winkellage des jeweiligen Probenhalters mittels des Stellmotors relativ zu der jeweiligen Lastübertragungseinrichtung.

Die Aktuationseinrichtung kann zumindest einen ortsfest an der jeweiligen Lastübertragungseinrichtung angeordneten Stellmotor umfassen, welcher zusammen mit einem an dem jeweiligen Probenhalter ausgebildeten Zahnverlaufsprofil jeweils ein Stirnradgetriebe oder ein Kegelradgetriebe ausbildet zur Veränderung der Winkellage des jeweiligen Probenhalters relativ zu der jeweiligen Lastübertragungseinrichtung.

Es kann erfindungsgemäß auch vorgesehen werden, dass an dem jeweiligen Probenhalter zumindest eine Aktuationseinrichtung, die jeweils dazu ausgebildet ist, die Winkellage der Probenhalter gegenüber der Lastübertragungseinrichtung aktiv einzustellen, wobei die mindestens zwei Aktuationseinrichtungen zwei synchron angesteuerte Antriebe umfassen zur Einstellung einer gemeinsamen Winkellage.

Es kann auch vorgesehen werden, dass die Stelleinrichtung eine gemeinsame Aktuationseinrichtung umfasst und wobei die beiden Probenhalter über die mindestens eine Verbindungseinrichtung in der Prüfebene lasttragend miteinander verbindbar sind zur gemeinsamen Verstellung der Winkellage der beiden Probenhalter relativ zu den Lastübertragungseinrichtungen über die eine gemeinsame Aktuationseinrichtung.

Das Zahnverlaufsprofil kann sich bogenförmig entlang der Führungsschiene des Probenhalters erstrecken.

Gemäß einem weiteren Aspekt der vorliegenden Erfindung wird die Aufgabe gelöst durch ein Prüfsystem, welches eine einaxiale Prüfmaschine sowie eine Prüfvorrichtung gemäß dem ersten Aspekt der vorliegenden Erfindung umfasst. Die Prüfvorrichtung kann über die erste und zweite Lastübertragungseinrichtung lasttragend mit der einaxialen Prüfmaschine verbunden werden zur Einprägung eines definierten Lastfalls auf einen in der Prüfvorrichtung eingespannten Prüfkörper. Der Prüfkörper kann insbesondere einen eingeprägten Riss aufweisen.

Gemäß einem weiteren Aspekt der vorliegenden Erfindung ist eine Verwendung einer Prüfvorrichtung gemäß dem ersten Aspekt der Erfindung oder eines Prüfsystems gemäß dem zweiten Aspekt der Erfindung vorgesehen zur Erzeugung eines zeitlich veränderbaren Mixed-Mode-Belastungszustandes in einem Prüfkörper an einer einaxialen Prüfmaschine.

Nachfolgend wird unter Bezugnahme auf die beigefügten Figuren eine beispielhafte Ausführungsform einer erfindungsgemäßen Prüfvorrichtung dargestellt.

Es zeigen:
- Fig. 1: eine schematische Vorderansicht einer erfindungsgemäßen Prüfvorrichtung;
- Fig. 2: eine perspektivische Ansicht eines beispielhaften erfindungsgemäßen Probenhalters.

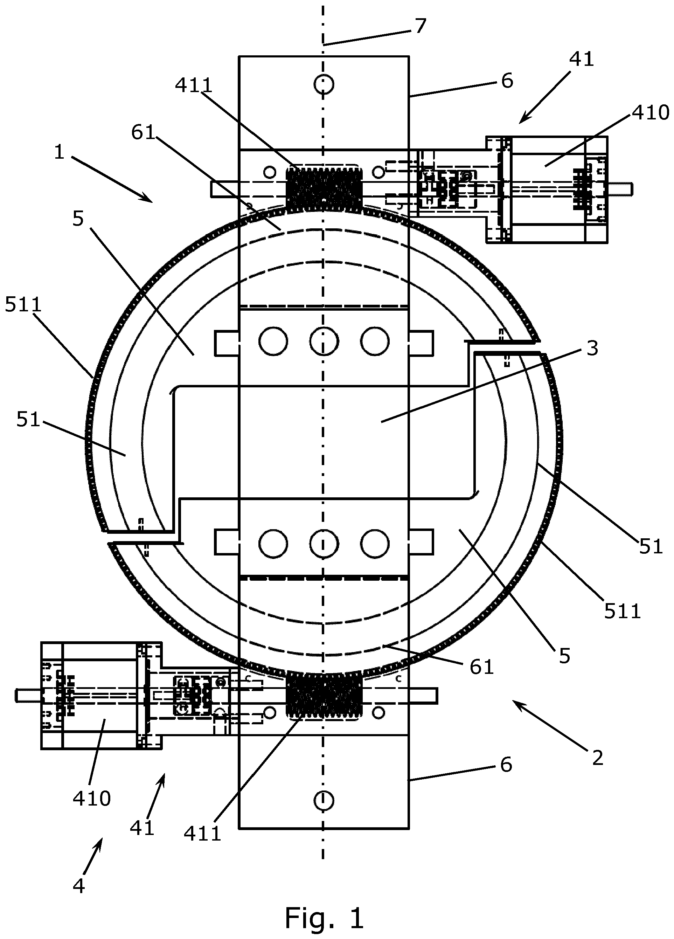

Die Fig. 1 zeigt eine schematische beispielhafte Vorderansicht einer erfindungsgemäßen Prüfvorrichtung in Durchsicht, wobei die Prüfebene in der eigentlichen Darstellungsebene der Fig. 1 liegt. Die dargestellte Prüfvorrichtung zur Erzeugung eines Mixed-Mode-Belastungszustandes an einer einaxialen Prüfmaschine umfasst in der dargestellten Ausführungsform zunächst eine erste Spanneinrichtung 1 sowie eine zweite Spanneinrichtung 2 zur Einspannung eines Prüfkörpers 3 in einer Prüfebene sowie eine Stelleinrichtung 4. Die erste und zweite Spanneinrichtung 1, 2 weisen jeweils einen Probenhalter 5 zur Einspannung von zwei einander gegenüberliegenden Enden des Prüfkörpers 3 und jeweils eine Lastübertragungseinrichtung 6 zur lasttragenden Verbindung der Probenhalter 5 entlang einer Prüfvorrichtung 7 mit der Prüfmaschine auf. Der dargestellte Prüfkörper 3 ist blechförmig ausgebildet und erstreckt sich in der Prüfebene. Die Lastübertragungseinrichtungen 6 weisen in der dargestellten Ausführungsform eine durchgehende Bohrung zur Verbolzung der jeweiligen Lastübertragungseinrichtung mit einem lastübertragenden Element der eigentlichen Prüfmaschine auf. Über die verbolzte Übertragung der Last von der Prüfmaschine auf die eigentliche Prüfvorrichtung wird sichergestellt, dass über die beiden einander gegenüberliegenden Bolzen lediglich eine Normalkraft entlang der einaxialen Prüfrichtung 7 in die Prüfvorrichtung eingebracht wird.

Der jeweilige Probenhalter 5 ist in der Prüfebene gegenüber der jeweiligen Lastüberragungseinrichtung 6 verschiebbar ausgestaltet zur Veränderung einer Winkellage der Probenhalter 5 relativ zu den Lastübertragungseinrichtungen 6. Folglich kann die Winkellage der beiden Probenhalter 5 und damit auch die Winkellage des Prüfkörpers 3 relativ zu der Prüfmaschine verändert werden. Die Stelleinrichtung 4 ist dazu ausgebildet, die Winkellage der Probenhalter 5 gegenüber der jeweiligen Lastübertragungseinrichtung 6 in der Prüfebene einzustellen bzw. zu verändern.

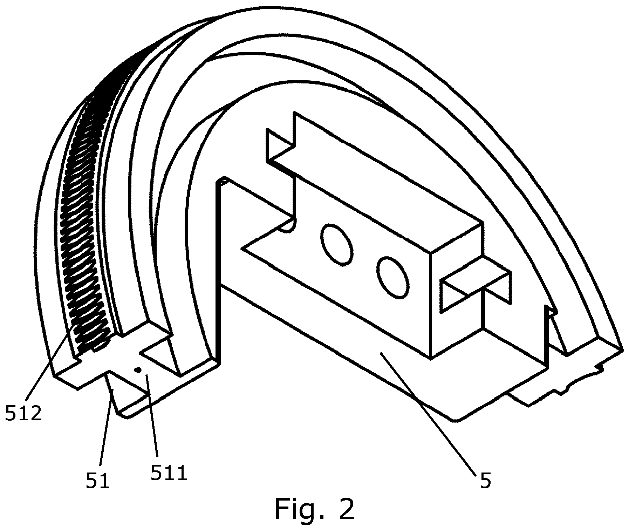

Die Probenhalter 5 weisen in der dargestellten Ausführungsform jeweils eine in der Prüfebene verlaufende bogenförmige Führungsschiene 51 auf, wobei eine beispielhafte Ausführungsform insbesondere der Fig. 2 entnehmbar ist. Die Lastübertragungseinrichtungen 6 weisen jeweils zumindest ein an die Führungsschiene 51 angepasstes Führungselement 61 auf zur Ausbildung mindestens zwei in der Prüfebene verschieblichen und in Prüfrichtung lastübertragenden Lagern.

Wie dies der Fig. 2 entnehmbar ist, weist die Führungsschiene 51 in einer Ebene orthogonal zu der Prüfebene ein T-förmiges Querschnittsprofil 511 auf. Wie dies der Fig. 2 entnehmbar ist, weist die dargestellte beispielhafte Ausführungsform des Probenhalters 5 zwei einander gegenüberliegende Führungsbahnen oder Führungskulissen der Führungsschiene 51 auf. Jede Lastübertragungseinrichtung 6 weist in der dargestellten Ausführungsform zwei parallel zu der Prüfebene bogenförmig verlaufende Führungselemente 61 auf, wobei die bogenförmigen Führungselemente 61 an die Dimensionen und den Verlauf der Führungsschiene 51 angepasst sind und in diese eingreifen zur Ausbildung eines verschieblichen Lagers zwischen die jeweiligen Probenhalter 5 und die jeweilige Lastübertragungseinrichtung 6. Die mindestens zwei lastübertragenden verschieblichen Lager können, wie in den Figuren 1 und 2 dargestellt, als Gleitlager erfindungsgemäß ausgebildet werden. Allerdings kann es auch vorgesehen werden, beispielsweise zusätzliche rotatorische Lagerelemente, wie beispielsweise Rollen oder Tonnenlager, einzubringen zur Realisierung eines entsprechenden Lagers.

Die Stelleinrichtung 4 kann zumindest eine, bzw. wie dargestellt zumindest zwei Aktuationseinrichtungen 41 aufweisen, die elektrisch oder pneumatisch angetrieben werden können, wobei die Aktuationseinrichtungen 41 ausgebildet sind, die Winkellage der Probenhalter 5 gegenüber der Lastübertragungseinrichtung 6 aktiv einzustellen bzw. zu verändern. Die Aktuationseinrichtung 41 kann, wie dargestellt, zumindest einen ortsfest an der jeweiligen Lastübertragungseinrichtung 6 angeordneten Stellmotor 410 mit einer schraubenförmigen Schneckenwelle 411 umfassen. Der jeweilige Probenhalter 5 kann einen an die Schneckenwelle 411 angepasstes Zahnverlaufsprofil 512 umfassen zur Veränderung der Winkellage des jeweiligen Probenhalters 5 relativ zu der jeweiligen Lastübertragungseinrichtung 6.

Wie dies der Figur 2 entnehmbar ist kann das Zahnverlaufsprofil 512 an einer Außenfläche des Probenhalters 5 ausgebildet werden, wobei die Außenfläche bevorzugt ebenfalls bogenförmig in der Prüfebene ausgebildet werden kann, wie in Figur 2 dargestellt.

## Patentansprüche

1. Prüfvorrichtung zur automatisierbaren Erzeugung eines Mixed-Mode-Belastungszustands an einer einaxialen Prüfmaschine, die Prüfvorrichtung umfassend:
eine erste und eine zweite Spanneinrichtung (1, 2) zur Einspannung eines Prüfkörpers (3) in einer Prüfebene sowie eine Stelleinrichtung (4),
wobei die erste und zweite Spanneinrichtung (1,2) jeweils einen Probenhalter (5) zur Einspannung von zwei einander gegenüberliegender Enden des Prüfkörpers (3) und jeweils eine Lastübertragungseinrichtung (6) zur lasttragenden Verbindung der Probenhalter (5) entlang einer Prüfrichtung (7) mit der Prüfmaschine umfasst, wobei der jeweilige Probenhalter (5) gegenüber der jeweiligen Lastübertragungseinrichtung (6) in der Prüfebene verschiebbar ausgestaltet ist zur Veränderung einer Winkellage der Probenhalter (5) relativ zu den Lastübertragungseinrichtungen (6), und
wobei die Stelleinrichtung (4) dazu ausgebildet ist, die Winkellage der Probenhalter (5) gegenüber der jeweiligen Lastübertragungseinrichtung (6) in der Prüfebene einzustellen.

2. Prüfvorrichtung nach Anspruch 1, wobei die Probenhalter (5) jeweils eine in der Prüfebene verlaufende bogenförmige Führungsschiene (51) umfassen und wobei die Lastübertragungseinrichtungen (6) jeweils zumindest ein an die Führungsschiene (51) angepasstes Führungselement (61) umfassen zur Ausbildung mindestens zwei in der Prüfebene verschieblichen und in Prüfrichtung (7) lastübertragenden Lagern.

3. Prüfvorrichtung nach Anspruch 1 oder 2, wobei zwischen den Probenhaltern (5) und den Lastübertragungseinrichtungen (6) in der Prüfebene eine Mehrzahl von Gleit- oder Wälzlagerelementen angeordnet sind.

4. Prüfvorrichtung nach Anspruch 2 oder 3, wobei die Führungsschiene (51) in einer Ebene orthogonal zu der Prüfebene ein "T"-förmiges Querschnittsprofil (511) umfasst.

5. Prüfvorrichtung nach Anspruch 2 oder 3, wobei die Führungsschiene (51) in einer Ebene orthogonal zu der Prüfebene ein schwalbenschwanzförmiges Querschnittsprofil (511) umfasst.

6. Prüfvorrichtung nach einem der Ansprüche 2 bis 5, wobei jede Lastübertragungseinrichtung (6) zwei parallel zu der Prüfebene bogenförmig verlaufende, gegenüber der Prüfebene einander gegenüberliegende, Führungselemente (61) umfasst, und wobei die bogenförmigen Führungselemente (61) an die Dimensionen und den Verlauf der Führungsschiene (51) angepasst sind und in diese eingreifen zur Ausbildung eines verschieblichen Lagers zwischen dem jeweiligen Probenhalter (5) und der jeweiligen Lastübertragungseinrichtung (6).

7. Prüfvorrichtung nach einem der Ansprüche 2 bis 6, wobei die mindestens zwei lastübertragenden und verschieblichen Lager als Gleitlager ausgebildet sind.

8. Prüfvorrichtung nach einem der vorausgehenden Ansprüche, wobei die Stelleinrichtung (4) zumindest eine Aktuationseinrichtung (41) umfasst, die elektrisch oder pneumatisch angetrieben ist und wobei die Aktuationseinrichtung (41) ausgebildet ist, die Winkellage der Probenhalter (5) gegenüber der Lastübertragungseinrichtung (6) aktiv einzustellen.

9. Prüfvorrichtung nach einem der vorausgehenden Ansprüche, wobei die Aktuationseinrichtung (41) zumindest einen ortsfest an der jeweiligen Lastübertragungseinrichtung (6) angeordneten Stellmotor (410) mit einer schraubenförmigen Schneckenwelle (411) umfasst und wobei der jeweilige Probenhalter (5) ein an die Schneckenwelle (411) angepasstes Zahnverlaufsprofil (512) umfasst zur Veränderung der Winkellage des jeweiligen Probenhalters (5) relativ zu der jeweiligen Lastübertragungseinrichtung (6).

10. Prüfvorrichtung nach einem der Ansprüche 1 bis 9, wobei die Aktuationseinrichtung (41) zumindest einen ortsfest an der jeweiligen Lastübertragungseinrichtung (6) angeordneten Stellmotor (410) umfasst, welcher zusammen mit einem an dem jeweiligen Probenhalter (5) ausgebildeten Zahnverlaufsprofil (512) jeweils ein Stirnradgetriebe oder ein Kegelradgetriebe ausgebildet zur Veränderung der Winkellage des jeweiligen Probenhalters (5) relativ zu der jeweiligen Lastübertragungseinrichtung (6).

11. Prüfvorrichtung nach einem der vorausgehenden Ansprüche, wobei an dem jeweiligen Probenhalter (5) zumindest eine Aktuationseinrichtung (41) die jeweils dazu ausgebildet ist die Winkellage der Probenhalter (5) gegenüber der Lastübertragungseinrichtung (6) aktiv einzustellen, wobei die mindestens zwei Aktuationseinrichtungen (41) zwei synchron angesteuerte Antriebe umfassen zur Einstellung einer gemeinsamen Winkellage.

12. Prüfvorrichtung nach einem der Ansprüche 1 bis 11, wobei die Stelleinrichtung (4) eine gemeinsame Aktuationseinrichtung (41) umfasst und wobei die beiden Probenhalter (5) über mindestens eine Verbindungseinrichtung in der Prüfebene lasttragend miteinander verbindbar sind zur gemeinsamen Verstellung der Winkellage der beiden Probenhalter (5) relativ zu den Lastübertragungseinrichtungen (6) über die eine gemeinsame Aktuationseinrichtung (41).

13. Prüfsystem umfassend eine einaxiale Prüfmaschine sowie eine Prüfvorrichtung nach einem der Ansprüche 1 bis 12, wobei die Prüfvorrichtung über die erste und zweite Lastübertragungseinrichtung (6) lasttragend mit der Prüfmaschine verbunden ist zur Einprägung eines definierten Lastfalls auf einen in der Prüfvorrichtung eingespannten Prüfkörper (3).

14. Verwendung einer Prüfvorrichtung gemäß einem der Ansprüche 1 bis 12 oder eines Prüfsystems gemäß Anspruch 13 zur Erzeugung eines veränderbaren Mixed-Mode-Belastungszustands in einem Prüfkörper (3) an einer einaxialen Prüfmaschine.
